Europäisches Patentamt

European Patent Office

Office européen des brevets

(11) Veröffentlichungsnummer: **0 270 994 B1**

(12) **EUROPÄISCHE PATENTSCHRIFT**

(45) Veröffentlichungstag der Patentschrift: **15.07.92**

(21) Anmeldenummer: **87117859.6**

(22) Anmeldetag: **03.12.87**

(51) Int. Cl.⁵: **H02B 1/20**, H02B 1/04

(54) **Geräteadapter.**

(30) Priorität: **12.12.86 DE 3642517**

(43) Veröffentlichungstag der Anmeldung:
**15.06.88 Patentblatt 88/24**

(45) Bekanntmachung des Hinweises auf die
Patenterteilung:
**15.07.92 Patentblatt 92/29**

(84) Benannte Vertragsstaaten:
**AT CH DE FR GB IT LI NL SE**

(56) Entgegenhaltungen:
**DE-A- 2 515 692**
**DE-A- 2 646 123**
**DE-A- 3 409 211**

(73) Patentinhaber: **Rittal-Werk Rudolf Loh GmbH & Co. KG**
**Auf dem Stützelberg**
**W-6348 Herborn(DE)**

(72) Erfinder: **Wagener, Hans**
**Rittershäuser Strasse 14**
**W-6344 Dietzhölztal 2(DE)**
Erfinder: **Münch, Udo**
**Wetzlarer Strasse 41**
**W-6349 Sinn(DE)**
Erfinder: **Zachrei, Jürgen**
**Am Hungersberg 2**
**W-6340 Dillenburg 8(DE)**

(74) Vertreter: **Vogel, Georg**
**Pat.-Ing. Georg Vogel Hermann-Essig-Strasse 35**
**W-7141 Schwieberdingen(DE)**

## Beschreibung

Die Erfindung betrifft einen Geräteadapter zum mechanischen und elektrischen Verbinden von Installationsgeräten, wie Leitungsschutzschalter, Motorschutzschalter, Sicherungsschalter, Schaltschütze, Relais und dgl., mit Stromsammelschienen eines Sammelschienensystems, wobei die Installationsgeräte mit einem Befestigungsfuß für genormte Tragschienen versehen sind, bei dem ein Adaptergehäuse auf die Stromsammelschienen aufsetzbar ist, in dem auf die Stromsammelschienen ausgerichtet jeweils eine Kontaktschiene mit verstellbarem Klemmkörper festgehalten ist, bei dem mit den Klemmkörpern die Kontaktschienen mit den Stromsammelschienen mechanisch verspannbar und elektrisch verbindbar sind, bei dem die Kontaktschienen zu einer Anschlußseite des Adaptergehäuses geführt und dort als Anschlüsse für Leitungen ausgebildet sind, bei dem das Adaptergehäuse auf seiner Vorderseite einen Abschnitt einer Tragschiene zum Befestigen von Installationsgeräten trägt, und bei dem die Klemmkörper mittels Klemmschrauben an den Kontaktschienen gehalten und senkrecht zu den Stromsammelschienen verstellbar sind, wobei die Klemmschrauben von der Vorderseite des Adaptergehäuses aus zugänglich und betätigbar sind.

Ein Geräteadapter dieser Art ist durch die DE-A 34 09 211 bekannt. Dabei hintergreifen die Klemmkörper mit einem Schenkel die Stromsammelschienen und die Klemmschrauben sind an den Stromsammelschienen vorbei in eine Gewindebohrung dieses Schenkels eingeschraubt. Der andere Schenkel des Klemmkörpers ist jeweils durch einen Durchbruch in der zugeordneten Kontaktschiene geführt und wird mit der Klemmschraube auf der Kontaktschiene verspannt. Die Kontaktschienen werden mittels einer Abdeckung in dem Adaptergehäuse gehalten. Die Klemmschrauben sind durch Bohrungen von Führungsstücken geführt, die in den Klemmkörpern verstellbar geführt und mit den Klemmschrauben gegen die Stromsammelschienen verspannbar sind.

Der Aufbau dieses Geräteadapters ist durch die Verwendung einer getrennten Abdeckung zur Festlegung der Kontaktschienen und der zusätzlichen Führungsstücke sehr kompliziert und aufwendig. Darüber hinaus erfordern die Klemmschrauben einen großen Abstand zwischen den Stromsammelschienen des Sammelschienensystems, da diese neben dem Klemmkörper einen zusätzlichen Platz zwischen den Stromsammelschienen benötigen. Außerdem können die Klemmschrauben beim Lösen von den Klemmkörpern gelöst werden, so daß ihre Wiedereinführung in die Gewindebohrung in dem Schenkel des Klemmkörpers erschwert wird und gegebenenfalls der gesamte Geräteadapter von den Stromsammelschienen abgenommen werden muß, um diese Verbindung wieder herzustellen.

Ein weiterer Nachteil dieses Aufbaues ist, daß die Kontaktgabe von der Stromsammelschiene zu der Kontaktschiene über den Klemmkörper und das Führungsstück erfolgt. Es sind daher an einer Verbindung viele Kontaktstellen beteiligt, die bei Funkenbildung beschädigt werden können. Das Auswechseln dieser Teile erfordert eine völlige Demontage des Geräteadapters.

Die DE-A 25 15 692 zeigt ein NH-Sicherungsunterteil mit einem Gehäuse, in dem ein Klemmkörper untergebracht ist, der U-förmig ausgebildet ist und mit dem Quersteg auf einer Kontaktschiene im Gehäuse liegt. Die Seitenschenkel des Klemmkörpers umgreifen die Kontaktschiene. An den Enden sind die Seitenschenkel des Klemmkörpers als Haken ausgebildet, die die Stromsammelschiene hintergreifen. Im Quersteg des Klemmkörpers ist eine Gewindebohrung eingebracht, die eine Klemmschraube aufnimmt, welche sich auf der Kontaktschiene abstützt und diese gegen die Stromsammelschiene verspannt. Das Gehäuse trägt eine weitere Kontaktschiene, an der eine Leitung angeschlossen werden kann. Die beiden Kontaktschienen werden mittels eines Sicherungselementes elektrisch leitend miteinander verbunden. Pro Stromsammelschiene des Sammelschienensystems ist ein eigenes derartiges NH-Sicherungsunterteil vorgesehen.

Es ist Aufgabe der Erfindung, einen Geräteadapter der eingangs erwähnten Art zu schaffen, der im Aufbau einfach ist, an jeder Verbindung von Stromsammelschiene zu Kontaktschiene wenig Kontaktstellen aufweist und bei dem die zu Beschädigungen neigenden Teile leicht ausgetauscht werden können. Außerdem soll sichergestellt sein, daß nicht unbeabsichtigt Teile des Geräteadapters gelöst werden können.

Diese Aufgabe wird nach der Erfindung dadurch gelöst, daß die Kontaktschienen an der Rückseite des Adaptergehäuses zugänglich und mittels Schrauben mit dem Adaptergehäuse verbunden sind, daß die Klemmkörper mit einem Quersteg und Seitenschenkeln U-förmig ausgebildet sind und an den freien Enden der Seitenschenkel rechtwinklig abstehende Klemmbacken tragen, daß die Klemmkörper mit den Seitenschenkeln die Kontaktschienen umgreifen, wobei die Querstege auf den den Stromsammelschienen abgekehrten Seiten der Kontaktschienen angeordnet sind, daß die Klemmbacken der Seitenschenkel der Klemmkörper die im Querschnitt rechteckigen Stromsammelschienen hintergreifen, daß der lichte Abstand der Seitenschenkel der Klemmkörper an die Breite der Kontaktschienen angepaßt ist, daß die Klemmschrauben in Gewindebohrungen der Querstege der Klemmkörper verstellbar und unverlierbar gehalten sind, und daß die Klemmschrauben die Querstege der Klemmkörper durchqueren und mit ihren freien Enden axial unverschiebbar, jedoch drehbar in den zugeordneten Kontaktschienen gehalten sind.

Durch die Festlegung der Kontaktschienen an der Unterseite des Adaptergehäuses wird eine getrennte Gehäuseabdeckung überflüssig und die Kontaktschienen können einzeln sehr leicht ausgetauscht werden. Die Ausgestaltung der Klemmkörper mit den daran unverlierbar gehaltenen Klemmschrauben stellt sicher, daß alle Teile des Geräteadapters stets ihre Stellung am Geräteadapter beibehalten. Dies erleichtert die Handhabung des Geräteadapters. Außerdem wird die Stromsammelschiene großflächig mit dem Klemmkörper und der Kontaktschiene verbunden, so daß eine Verbindung nur zwei Kontaktstellen umfaßt.

Der Anschluß der in den Installationsgeräten führenden Leitungen wird dadurch erleichtert, daß die Kontaktschienen zu einer parallel zu den Stromsammelschienen verlaufenden Schmalseite des Adaptergehäuses geführt und dabei in den Bereich der Vorderseite desselben abgewinkelt sind und daß die Kontaktschienen im Bereich dieser Anschlußseite mit Gewindebohrungen für Anschlußklemmschrauben versehen sind. Mit den Anschlußklemmschrauben und an sich bekannte Klemmplatten lassen sich die abisolierten Enden der Leitungen mechanisch fest und elektrisch leitend mit den Kontaktschienen des Geräteadapters und darüber mit den Stromsammelschienen des Sammelschienensystems verbinden.

Ist nach einer weiteren Ausgestaltung vorgesehen, daß der Abschnitt einer Tragschiene lösbar mit dem Adaptergehäuse verbunden ist, dann können unterschiedliche Abschnitte auch unterschiedlicher Tragschienen mit dem Adaptergehäuse verbunden werden und der Geräteadapter kann so auf die verschiedenen Typen von Installationsgeräten mit entsprechenden Befestigungsfüßen angepaßt werden.

Die Strom- bzw. spannungsführenden Teile des Geräteadapters lassen sich dadurch berührungssicher abdecken, daß die Vorderseite des Adaptergehäuses mittels Abdeckplatten abdeckbar ist, wobei die Abdeckplatten mit Steckansätzen versehen sind, die in Steckaufnahmen des Adaptergehäuses einsteckbar sind.

Der Zugang zu den Anschlüssen des Geräteadapters ist dadurch leicht möglich, daß die Anschlüsse der Kontaktschienen im Bereich der Anschlußseite mittels einer getrennten, aufsteckbaren Abdeckkappe abdeckbar sind.

Eine bevorzugte Ausgestaltung sieht vor, daß die Tragschiene im Querschnitt U-förmig ausgebildet ist, wobei die freien Enden der Seitenschenkel rechtwinklig nach außen abgewinkelt sind, und daß die abgewinkelten Enden der Seitenschenkel in Ausnehmungen im Befestigungsfuß der Installationsgeräte eingeführt und darin gehalten sind. Ein ausreichender Halt des Installationsgerätes auf der Tragschiene wird dadurch erreicht, daß das eine abgewinkelte Ende in der einen Ausnehmung form- und kraftschlüssig eingeführt und gehalten ist, während das andere abgewinkelte Ende in der anderen Ausnehmung verspannt und unter Druckverbindung gehalten ist.

Die Erfindung wird anhand eines in den Zeichnungen dargestellten Ausführungsbeispiels näher erläutert. Es zeigt:

Fig. 1 einen Schnitt durch einen auf die Stromsammelschienen eines Sammelschienensystems aufgesetzten Geräteadapters entlang der Linie I-I der Fig. 2,

Fig. 2 eine Draufsicht auf den Geräteadapter in Richtung des Pfeiles II nach Fig. 1 und

Fig. 3 den Geräteadapter nach Fig. 2 mit abgedeckter Vorderseite.

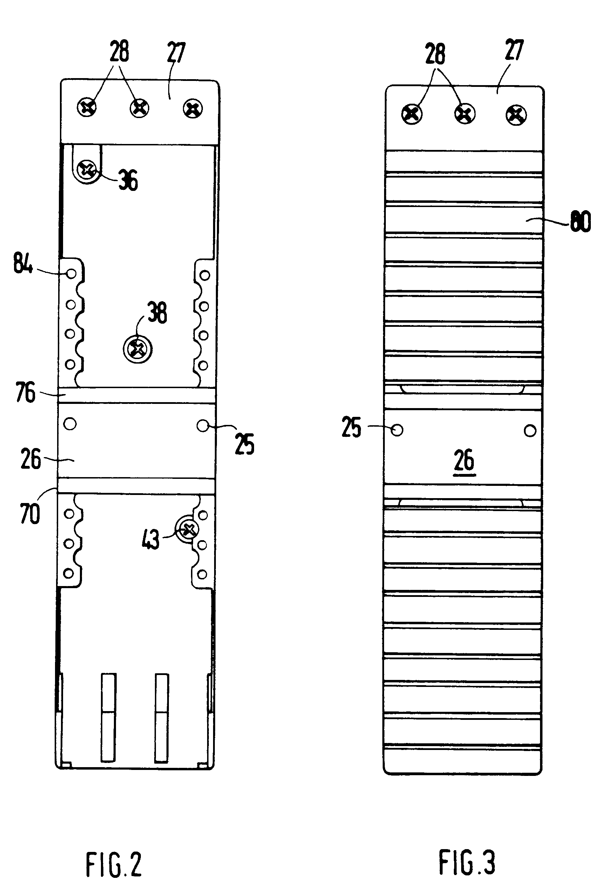

Der in den Zeichnungen dargestellte Geräteadapter dient zum mechanischen und elektrischen Verbinden von Installationsgeräten 10, wie Leitungsschutzschalter, Motorschutzschalter, Sicherungsschalter, Schaltschütze, Relais und dgl., mit den Stromsammelschienen 12, 14 und 16 eines Stromsammelschienensystems. Der Geräteadapter umfaßt ein Adaptergehäuse 18, in dem pro Stromsammelschiene 12, 14 bzw. 16 eine Kontaktschiene 30, 32 bzw. 34 gehalten und so angeordnet ist, daß diese auf die Stromsammelschienen 12, 14 und 16 ausgerichtet über die Rückseite des Adaptergehäuses 18 zugänglich sind. Die Kontaktschienen 30, 32 und 34 sind nebeneinander in einem vorgegebenen Phasenabstand isoliert voneinander fest mit dem aus Kunststoff bestehenden Adaptergehäuse 18 verschraubt, wie die Schrauben 70, 72 und 74 erkennen lassen. Die Kontaktschienen 30, 32 und 34 sind zu einer parallel zu den Stromsammelschienen 12, 14 und 16 verlaufenden Schmalseite des Adaptergehäuses 18 geführt und dabei so abgewinkelt, daß sie im Bereich der Vorderseite mit ihren Anschlußenden zugänglich sind. Diese Anschlüsse 28 sind als Klemmanschlüsse mit Klemmplatten und Anschlußklemmschrauben ausgebildet, an denen die Leitungen zu den Installationsgeräten 10 mechanisch fest und elektrisch leitend angebracht werden können. Die Kontaktschienen 30, 32 und 34 sind schmal, so daß, wie die Ansicht nach Fig. 2 zeigt, der Phasenabstand zwischen den Anschlüssen 28 klein gehalten werden kann und z.B. dem Phasenabstand eines dreiphasigen Installationsgerätes 10 entspricht.

In den Kontaktschienen 30, 32 und 34 sind Klemmschrauben 36, 38 und 40 mit ihren Enden drehbar, jedoch axial unverschiebbar gehalten. Diese Klemmschrauben 36, 38 und 40 sind in hülsenförmigen Ansätzen des Adaptergehäuses 18 geführt und von dessen Vorderseite aus betätigbar. Die Klemmschrauben 36, 38 und 40 sind dabei in Gewindebohrungen von Querstegen 56, 58 und 60 von U-förmigen Klemmkörpern 20, 22 und 24 verstellbar. Diese Klemmkörper 20, 22 und 24 umgreifen mit ihren Seitenschenkeln 50, 52 und 54 die Kontaktschienen 30, 32 und 34. Da der lichte Abstand der Seitenschenkel 50, 52 bzw. 54 der Breite der Kontaktschienen 30, 32 bzw. 34 entspricht, können sich die Klemmkörper 20, 22 und 24 bei ihrer Verstellung senkrecht zu den Stromsammelschienen 12, 14 und 16 nicht verdrehen. Die freien Enden der Seitenschenkel 50, 52 und 54 der Klemmkörper 20, 22 und 24 sind als abgewinkelte Klemmbacken 42, 44 und 46 ausgebildet, die die Stromsammelschienen 12, 14 und 16 nach dem Aufsetzen auf dieselben hintergreifen. Die Unterseite des Adaptergehäuses 18 muß daher so ausgebildet sein, daß es die Querverschiebung im Bezug auf die Stromsammelschienen 12, 14 und 16 erlaubt, um die Klemmbacken 42, 44 und 46 hinter die Stromsammelschienen 12, 14 und 16 einzuführen. Mit den Klemmschrauben 36, 38 und 40 werden die Klemmkörper 20, 22 und 24 senkrecht zu den Stromsammelschienen 10, 12 und 14 so weit verstellt, bis die Kontaktschienen 30, 32 und 34 fest mit den Stromsammelschienen 12, 14 und 16 verspannt und damit elektrisch leitend verbunden sind. Die doppelte Kontaktgabe zwischen den beiden Klemmbacken 42, 44 bzw. 46 der beiden Seitenschenkel 50, 52 bzw. 54 der Klemmkörper 20, 22 bzw. 24 bringt dabei nicht nur einen kleinen Kontaktübergangswiderstand, sondern auch eine symmetrische Verspannung mit den Kontaktschienen 30, 32 und 34, die mit ihren über die Schrauben 70, 72 und 74 vorstehenden Endbereichen 62, 64 und 66 satt auf den Stromsammelschienen 12, 14 und 16 aufliegen und verspannt sind.

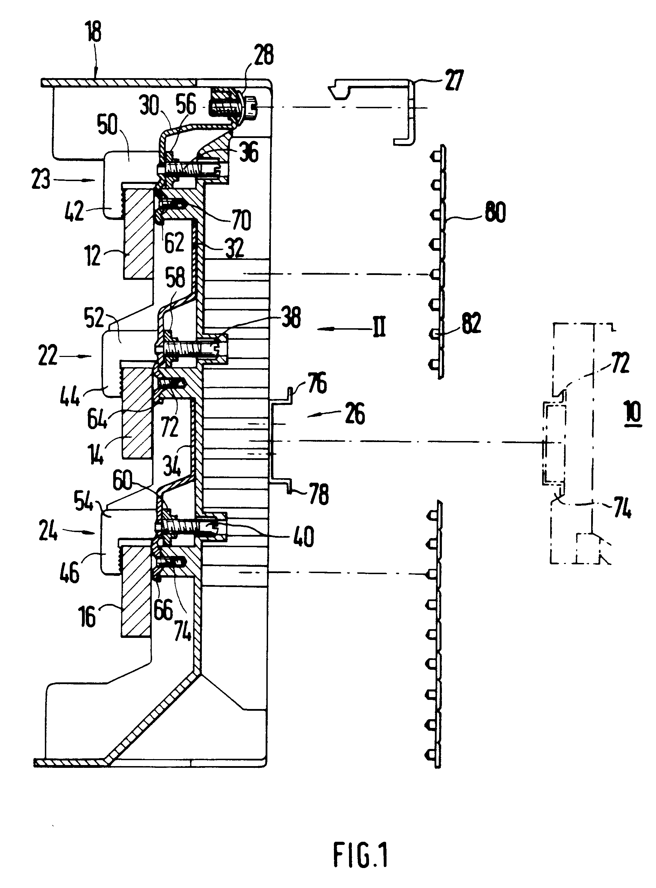

Auf der Innenseite der Seitenwände des Adaptergehäuses 18 sind Ansätze mit Steckaufnahmen 84 angeformt. In diese Steckaufnahmen 84 lassen sich auch Schrauben 25 selbstschneidend eindrehen, mit denen ein Abschnitt einer Tragschiene 26 mit dem Adaptergehäuse 18 verschraubt werden kann. Die Tragschiene 26 erstreckt sich über die Breite des Adaptergehäuses 18 und ist, wie Fig. 1 zeigt, im wesentlichen U-förmig. Die Seitenschenkel tragen am freien Ende rechtwinklig nach außen abgewinkelte Enden 76 und 78. Das Installationsgerät 10 weist im Befestigungsfuß entsprechende Ausnehmungen 72 und 74 auf. Dabei kann die Ausnehmung 72 das abgewinkelte Ende 76 der Tragschiene 26 kraft- und formschlüssig aufnehmen, während das abgewinkelte Ende 78 unter Druckausbildung in der Ausnehmung 74 verspannt wird. Wie bereits erwähnt, kann die Tragschiene 26 auch einen anderen genormten Querschnitt aufweisen und Installationsgeräte 10 mit entsprechend angepaßtem Befestigungsfuß aufnehmen. Daher ist die Tragschiene 26 auch lösbar mit dem Adaptergehäuse 18 verbunden. Der Geräteadapter läßt sich daher leicht an verschiedene Typen von Installationsgeräten 10 anpassen. Es braucht lediglich der entsprechende Abschnitt einer Tragschiene 26 am Adaptergehäuse 18 angebracht zu werden.

Ist der Geräteadapter fest mit den Stromsammelschienen 12, 14 und 16 verbunden, dann wird die offene Vorderseite außerhalb der Tragschiene 26 mittels Abdeckplatten 80 abgedeckt. Die Abdeckplatten 80 tragen auf der Unterseite Steckansätze 82, die in die Steckaufnahmen 84 des Adaptergehäuses 18 eingesteckt werden. Der Bereich mit den Anschlüssen 28 wird mittels einer getrennten Abdeckkappe 27 abgedeckt, um den Zugang zu den Anschlüssen 28 auch bei montiertem Geräteadapter zu erleichtern. Wie Fig. 3 zeigt, sind bei dem montierten Geräteadapter nur die Anschlußklemmschrauben der Anschlüsse 28 zugänglich. Die auf die Tragschiene 26 aufgebrachten Installationsgeräte 10 können schnell und leicht mit den Anschlüssen 28 verbunden werden.

Bei einem Sammelschienensystem können unterschiedlich dicke und unterschiedlich breite Stromsammelschienen eingesetzt sein. Um den Geräteadapter universell einsetzbar zu machen, ist nach einer Weiterbildung vorgesehen, daß der Verstellbereich der Klemmkörper an die maximale Dikke der Stromsammelschienen des Sammelschienensystems angepaßt ist und daß das Adaptergehäuse auf seiner Unterseite im Bereich der Klemmkörper Ausnehmungen aufweist, deren Breite der maximalen Breite der Stromsammelschienen des Sammelschienensystems plus der Breite der Klemmbacken der Klemmkörper entspricht.

Soll der Geräteadapter auch für Sammelschienensysteme mit unterschiedlichen Abständen der Stromsammelschienen eingesetzt werden, dann ist darüber hinaus noch vorgesehen, daß die Klemmkörper gegenüber den Kontaktschienen verstellbar und auf unterschiedliche Abstände der Stromsammelschienen des Sammelschienensystems einstellbar sind.

## Patentansprüche

1. Geräteadapter zum mechanischen und elektrischen Verbinden von Installationsgeräten, wie Leitungsschutzschalter, Motorschutzschalter, Sicherungsschalter, Schaltschütze, Relais und dgl., mit Stromsammelschienen (12,14,16) eines Sammelschienensystems, wobei die Installationsgeräte mit einem Befestigungsfuß für genormte Tragschienen (26) versehen sind, bei dem ein Adaptergehäuse (18) auf die Stromsammelschienen (12,14,16) aufsetzbar ist, in dem auf die Stromsammelschienen (12,14,16) ausgerichtet jeweils eine Kontaktschiene (30,32,34) mit verstellbarem Klemmkörper (20,22,24) festgehalten ist, bei dem mit den Klemmkörpern (20,22,24) die Kontaktschienen (30,32,34) mit den Stromsammelschienen (12,14,16) mechanisch verspannbar und elektrisch verbindbar sind, bei dem die Kontaktschienen (30,32,34) zu einer Anschlußseite des Adaptergehäuses (18) geführt und dort als Anschlüsse (28) für Leitungen ausgebildet sind, bei dem das Adaptergehäuse (18) auf seiner Vorderseite einen Abschnitt einer Tragschiene (26) zum Befestigen von Installationsgeräten (10) trägt, und bei dem die Klemmkörper (20,22,24) mittels Klemmschrauben (36,38,40) an den Kontaktschienen (30,32,34) gehalten und senkrecht zu den Stromsammelschienen (12,14,16) verstellbar sind, wobei die Klemmschrauben (36,38,40) von der Vorderseite des Adaptergehäuses (18) aus zugänglich und betätigbar sind, dadurch gekennzeichnet, daß die Kontaktschienen (30,32,34) an der Rückseite des Adaptergehäuses (18) zugänglich und mittels Schrauben (70,72,74) mit dem Adaptergehäuse (18) verbunden sind, daß die Klemmkörper (20,22,24) mit einem Quersteg (56,58,60) und Seitenschenkeln (50,52,54) U-förmig ausgebildet sind und an den freien Enden der Seitenschenkel (50,52,54) rechtwinklig abstehende Klemmbakken (42,44,46) tragen, daß die Klemmkörper (20,22,24) mit den Seitenschenkeln (50,52,54) die Kontaktschienen (30,32,34) umgreifen, wobei die Querstege (56,58,60) auf den den Stromsammelschienen (12,14,16) abgekehrten Seiten der Kontaktschienen (30,32,34) angeordnet sind, daß die Klemmbacken (42,44,46) der Seitenschenkel (50,52,54) der Klemmkörper (20,22,24) die im Querschnitt rechteckigen Stromsammelschienen (12,14,16) hintergreifen, daß der lichte Abstand der Seitenschenkel (50,52,54) der Klemmkörper (20,22,24) an die Breite der Kontaktschienen (30,32,34) angepaßt ist, daß die Klemmschrauben (36,38,40) in Gewindebohrungen der Querstege (56,58,60) der Klemmkörper (30,32,34) verstellbar und unverlierbar gehalten sind, und daß die Klemmschrauben (36,38,40) die Querstege (56,58,60) der Klemmkörper (30,32,34) durchqueren und mit ihren freien Enden axial unverschiebbar, jedoch drehbar in den zugeordneten Kontaktschienen (30,32,34) gehalten sind.

2. Geräteadapter nach Anspruch 1, dadurch gekennzeichnet, daß die Kontaktschienen (30,32,34) zu einer parallel zu den Stromsammelschienen (12,14,16) verlaufenden Schmalseite des Adaptergehäuses (18) geführt und dabei in den Bereich der Vorderseite desselben abgewinkelt sind, und daß die Kontaktschienen (30,32,34) im Bereich dieser Anschlußseite mit Gewindebohrungen für Anschlußklemmschrauben versehen sind.

3. Geräteadapter nach Anspruch 1 oder 2, dadurch gekennzeichnet, daß der Abschnitt einer Tragschiene (26) lösbar mit dem Adaptergehäuse (18) verbunden ist.

4. Geräteadapter nach einem der Ansprüche 1 bis 3, dadurch gekennzeichnet, daß die Vorderseite des Adaptergehäuses (18) mittels Abdeckplatten (80) abdeckbar ist, wobei die Abdeckplatten (80) mit Steckansätzen (82) versehen sind, die in Steckaufnahmen (84) des Adaptergehäuses (18) einsteckbar ist.

5. Geräteadapter nach einem der Ansprüche 1 bis 4, dadurch gekennzeichnet, daß die Anschlüsse (28) der Kontaktschienen (30,32,34) im Bereich der Anschlußseite mittels einer getrennten, aufsteckbaren Abdeckkappe (27) abdeckbar sind.

6. Geräteadapter nach einem der Ansprüche 1 bis 5, dadurch gekennzeichnet, daß die Tragschiene (26) im Querschnitt U-förmig ausgebildet ist, wobei die freien Enden der Seitenschenkel rechtwinklig nach außen abgewinkelt sind, und daß die abgewinkelten Enden (76,78) der Seitenschenkel in Ausnehmungen (72,74) im Befestigungsfuß der Installationsgeräte (10) eingeführt und darin gehalten sind.

7. Geräteadapter nach Anspruch 6, dadurch gekennzeichnet, daß das eine abgewinkelte Ende (76) in der einen Ausnehmung (72) form- und kraftschlüssig eingeführt und gehalten ist, während das andere abgewinkelte Ende (78) in der anderen Ausnehmung (74) verspannt und unter Druckverbindung gehalten ist.

8. Geräteadapter nach einem der Ansprüche 1 bis 7,

dadurch gekennzeichnet,

daß der Verstellbereich der Klemmkörper (20,22,24) an die maximale Dicke der Stromsammelschienen (12,14,16) des Sammelschienensystems angepaßt ist und

daß das Adaptergehäuse (18) auf seiner Unterseite im Bereich der Klemmkörper (20,22,24) Ausnehmungen aufweist, deren Breite der maximalen Breite der Stromsammelschienen (12,14,16) des Sammelschienensystems plus der Breite der Klemmbacken (42,44,46) der Klemmkörper (20,22,24) entspricht.

9. Geräteadapter nach Anspruch 8,

dadurch gekennzeichnet,

daß die Klemmkörper (20,22,24) gegenüber den Kontaktschienen (30,32,34) verstellbar und auf unterschiedliche Abstände der Stromsammelschienen (12,14,16) des Sammelschienensystems einstellbar sind.

## Claims

1. Appliance adapter for the mechanical and electrical connection of installations appliances such as power breaker, motor circuit-breakers, contactors, relays and similar, with busbars (12,14,16) of a busbar system, wherein the installation appliances are provided with a fixing base for standardized supporting bars (26), wherein an adapter housing (18) can be mounted onto the busbars (12,14,16), in which with direction to the busbars (25,26,27) a contact rail (30,32,34) with an adjustable clamping element (20,22,24) is fastened, in which the contact rails (30,32,34) can be mechanically clamped and electrically conductively connected with the busbars (12,14,16) by means of the clamping elements (20,22,24), wherein the contact rails (30,32,34) are led to one connection side of the adapter housing (18) and function there as connections (28) for leads, wherein the adapter housing (18) on its front side bears a portion of a supporting bar (26) for the fastening of installation appliances (10), and in which the clamping elements (20,22,24) are fixed on the contact rails (30,32,34) by means of clamping screws (36,38,40) and are adjustable vertically to the busbars (12,14,16), wherein the clamping screws (36,38,40) are accessible and controllable from the front side of the adapter housing (18),

characterized thereby

that the contact rails (30,32,34) are accessible from the rear side of the adapter housing (18) and connected with the adapter housing (18) by means of screws (70,72,74),

that the clamping elements (20,22,24) with a traverse (56,58,60) and sides (50,52,54) are U-shaped and on the free ends of the sides (50,52,54) are provided with clamping jaws (42,44,46) which protude rectangulary,

that the clamping elements (20,22,24) with the sides (50,52,54) enclose the contact rails (30,32,34), wherein the traverses (56,58,60) are located on the sides of the contact rails (30,32,34) opposite to the busbars (12,14,16),

that the clamping jaws (42,44,46) of the sides (50,52,54) of the clamping elements (20,22,24) comprise from the rear side the busbars (12,14,16) of recatangular section,

that the clear distance of the sides (50,52,54) of the clamping elements (20,22,24) is matched to the width of the contact rails (30,32,34),

that the clamping screws (36,38,40) are adjustably and captively held in threaded holes of the traverses (56,58,60) of the clamping elements (30,32,34), and that the clamping screws (36,38,40) protude the traverses (56,58,60) of the clamping elements (30,32,34) and with their free ends they are axially fixed, but still rotatable within the related contact rails (30,32,34).

2. Appliance adapter according to claim 1,

characterized thereby,

that the contact rails (30,32,34) are led to a narrow side of the adapter housing (18) being parallel to the busbars (12,14,16) and thereby bent in its front side, and

that the contact rails (30,32,34) are provided with threaded holes for screw clamp terminals in that connection-side area.

3. Appliance adapter according to claim 1 or 2,

characterized thereby,

that the portion of a supporting bar (26) is detachably connected with the adapter housing (18).

4. Appliance adapter according to one of the claims 1 to 3,

characterized thereby,

that the front side of the adapter housing (18) can be covered with plates (80), wherein the plates (80) are equipped with plug-in noses (82), which can be plugged in the locations (84) of the adapter housing (18).

5. Appliance adapter according to one of the claims 1 to 4,

characterized thereby,

that in the connection-side area the connections (28) of the contact rails (30,32,34) can be covered by a separate, detachable cap (27).

**6.** Appliance adapter according to one of the claims 1 to 5, characterized thereby, that the supporting rail (26) has an U-shaped section, wherein the free ends of the sides are rectangulary bent outwards, and that the bent ends (76,78) of the sides are introduced in recesses (72,74) in the fastening base of the installation appliances (10) and held therein.

**7.** Appliance adapter according to claim 6, characterized thereby, that the one bent end (76) is introduced in one recess (72) with positive locking and retained therein, while the other bent end (78) is fastened in the other recess (74) and held here under pressure.

**8.** Appliance adapter according to one of the claims 1 to 7, characterized thereby, that the ajdusting scope of the clamping elements (20,22,24) is matched to the maximum thickness of the busbars (12,14,16) of the busbar system and that the adapter housing (18) on its lower side is provided with recesses in the area of the clamping elements (20,22,24), the width of which corresponds to the maximum width of the busbars (12,14,16) of the busbar system plus the width of the clamping jaws (42,44,46) of the clamping elements (20,22,24).

**9.** Appliance adapter according to claim 8, characterized thereby, that the clamping elements (20,22,24) are adjustable in relation to the contact rails (30,32,34) and adjustable to different distances of the busbars (12,14,16) of the busbar system.

**Revendications**

**1.** Adaptateur pour la connexion mécanique et électrique d'appareils d'installation tels qu'interrupteurs automatiques, coffrets de protection, contacteurs, relais et similaires, avec des barres conductrices (12,14,16) d'un système de barres conductrices, où les appareils d'installation sont munis d'une embase de fixation pour des barres d'appui standardisées (26) et un coffret d'adaptateur (18) peut être monté sur les barres conductrices (12,14,16), dans lequel est prévu un rail de contact (30,32,34) orienté vers les barres conductrices (12,14,16) et fixé au moyen d'un élément de serrage (20,22,24) réglable, où les rails de contact (30,32,34) sont mécaniquement serrables et conductiblement reliables aux barres conductrices (12,14,16) au moyen des éléments de serrage (20,22,24) dans lequel les rails de contact (30,32,34) sont guidés sur un côté de raccordement du coffret d'adaptateur (18) et y servent de raccords (28) pour des lignes, dans lequel le coffret d'adaptateur (18) porte du côté avant une partie d'une barre d'appui (26) pour la fixation d'appareils d'installation (10) et dans lequel les éléments de serrage (20,22,24) sont fixés aux rails de contact (30,32,34) au moyen de vis de serrage (36,38,40) et sont verticalement réglables aux barres conductrices (12,14,16), où les vis de serrage (36,38,40) sont accessibles et controllables du côté avant du coffret d'adaptateur (18), caractérisé en ce que les rails de contact (30,32,34) sont accessibles du côté arrière du coffret d'adaptateur (18) et reliés audit coffret d'adaptateur (18) au moyen de vis (70,72,74), que les éléments de serrage (20,22,24) avec leur traverse (56,58,60) et leurs côtés latéraux (50,52,54) sont formés en U et munis de mâchoirs de serrage (42,44,46) saillant rectangulairement des extrémités libres des côtés latéraux (50,52,54), que les côtés latéraux (50,52,54) des éléments de serrage (20,22,24) entourent les rails de contact (30,32,34) où les traverses (56,58,60) sont placées du côté des rails de contact (30,32,34) opposé aux barres conductrices (12,14,16), que les mâchoirs de serrage (42,44,46) des côtés latéraux (50,52,54) des éléments de serrage (20,22,24) enveloppent du côté arrière les barres conductrices (12,14,16) de section rectangulaire, que l'écartement entre les côtés latéraux (50,52,54) des éléments de serrage (20,22,24) est adapté à la largeur des rails de contact (30,32,34), que les vis de serrage (36,38,40) sont montés dans des trous taraudés des traverses (56,58,60) et y réglables et imperdables, et que les vis de serrage (36,38,40) passent les traverses (56,58,60) des éléments de serrage et leurs extrémités libres sont fixées dans les rails de contact (30,32,34) axialement non-réglables, mais orientables.

**2.** Adaptateur selon la revendication 1, caractérisé en ce que les rails de contact (30,32,34) sont guidés vers le côté étroit du coffret d'adaptateur (18) parallel aux barres conductrices (12,14,16) où ils sont coudés en direction du côté avant dudit coffret, et
que dans ce domaine de raccordement les rails de contact (30,32,34) sont munis de trous taraudés pour des bornes à vis.

3. Adaptateur selon la revendication 1 ou 2, caractérisé en ce
que la partie d'un rail de support (26) est amoviblement reliée au coffret d'adaptateur (18).

4. Adaptateur selon l'une des revendication de 1 à 3,
caractérisé en ce
que le côté avant du coffret d'adaptateur (18) peut être recouvert de plaques de recouvrement (80), où les plaques de recouvrement (80) sont munies d'épaulements (82) enfichables dans des logements (84) du coffret d'adaptateur (18).

5. Adaptateur selon l'une des revendications de 1 à 4,
caractérisé en ce
que les raccords (28) des rails de contact (30,32,34) peuvent être recouverts d'un capot (27) séparé et enfichable du côté de raccordement.

6. Adaptateur selon l'une des revendications de 1 à 5,
caractérisé en ce
que la barre d'appui (26) a une section en U où les extrémités libres des côtés sont coudées rectangulairement vers l'extérieur et que les extrémités coudées (76,78) des côtés latéraux sont introduites dans des creux (72,74) prévus dans l'embase des appareils d'installation (10) et y retenues.

7. Adaptateur selon la revendication 6, caractérisé en ce
que l'une extrémité coudée (76) est introduite à engagement positif dans un creux (72) et y retenue, pendant que l'autre extrémité coudée (78) est serrée dans l'autre creux et y retenue sous pression.

8. Adaptateur selon l'une des revendication de 1 à 7,
caractérisé en ce
que le domaine de réglage des éléments de serrage (20,22,24) est adapté à l'épaisseur maximale des barres conductrices (12,14,16) du système de barres conductrices et que du côté inférieur le coffret d'adaptateur (18) est muni de creux dans la zone des éléments de serrage (20,22,24) dont la largeur correspond à la largeur maximale des barres conductrices (12,14,16) du système de barres conductrices plus la largeur des mâchoirs de serrage (42,44,46) des éléments de serrage (20,22,24).

9. Adaptateur selon la revendication 8, caractérisé en ce
que les éléments de serrage (20,22,24) sont réglables par rapport aux rails de contact (30,32,34) et à des distances différentes entre les barres conductrices (12,14,16) du système de barres conductrices.

FIG.1

FIG.2

FIG.3